# EUROPEAN PATENT APPLICATION

(11) **EP 4 487 942 A1**
(43) Date of publication of application: **08.01.2025**
(21) Application number: 24161238.1
(22) Date of filing: 04.03.2024
(51) Int. Cl.: B01F 23/50, B01F 23/53, B01F 35/33

(54) **A STIRRING METHOD AND DEVICE SUITABLE FOR LARGE CAPACITY AND HIGH VISCOSITY PASTE**

(30) Priority: 04.07.2023 CN 202310809779
(71) Applicant: Highsun Technology Co., Ltd., Hangzhou, Zhejiang 310000 (CN)
(72) Inventor: Lizhao, Wang, Hangzhou (CN); Hongbo, Fu, Hangzhou (CN); Shaoyong, Zheng, Hangzhou (CN)
(74) Representative: Monteiro Alves, Inês

(57) **Abstract**

A stirring method and device applicable for high-capacity and high-viscosity slurry. The stirring method utilizes a stirring device comprising a driving motor and a stirring blade driven by the driving motor to rotate. The method includes the following steps: placing powder and liquid into the stirring device, stirring the powder and liquid according to a set rotation speed and a first set time by driving the driving motor, controlling the driving motor to momentarily stop after reaching the first set time and maintaining the stop state for a second set time, wherein the second set time is a selected value between 100ms and 300ms, and repeating steps S200 and S300 after reaching the second set time.

## Description

### Technical Field

The present invention relates to the field of stirring process technology, and more particularly to a stirring method and device suitable for large capacity and high viscosity paste.

### Background Technology

In fields such as new energy batteries, food, medicine, and chemicals, there are many cases where powders and liquids need to be mixed to form a paste. In the existing technology, a stirring device is generally used to stir and produce the final paste product. With the increasing production capacity requirements, stirring devices are developing towards larger capacity, which means that more materials can be added at one time, thus improving stirring efficiency. However, this has brought a new technical problem: large capacity powders and liquids often take a long time to stir and the stirring is not uniform (the final product viscosity and fineness are difficult to meet the standard, or it takes a long time to meet the product specifications), especially for high viscosity pastes, the above problems are more pronounced. In the existing technology, many solutions have been proposed to solve the above technical problems. For example, in Chinese patents CN116111034A and CN115945086A, the following ideas are disclosed: increasing the number of feedings in batches and using alternating forward and reverse rotation to improve stirring efficiency and effect. Chinese patent CN115318143A specifically proposes a stirring method for high viscosity paste, which changes the stirring direction when the viscosity reaches a certain level. However, in the application of the above solutions, the stirring time is still long and the stirring efficiency is still low under the premise of meeting the standard requirements for stirring effect. This technical problem needs to be solved urgently.

### Invention content

The present invention aims to solve, to some extent, one of the technical problems in the related technology. To achieve the above objectives, the present invention adopts the following technical solution: a stirring method suitable for large capacity and high viscosity paste, implemented using a stirring device, and the stirring device includes a driving motor and a stirring blade driven by the driving motor to rotate. The method includes the following steps:
S100: Putting powders and liquids into the stirring device;
S200: Stirring the powders and liquids at a set speed and a first set time by driving the stirring blade with the driving motor;
S300: Controlling the driving motor to stop momentarily after reaching the first set time and maintaining the stop state within a second set time, wherein the second set time is a selected value between 100ms and 300ms;
S400: Repeating steps S200 and S300 after reaching the second set time.

The application of the present invention has the following beneficial effects: through research, it is found that during the stirring of large-capacity paste, the following phenomena lead to low stirring efficiency and poor stirring effect: as the stirring progresses, the paste will show "layering" phenomenon, the paste at the lower part is sufficiently stirred, while the paste at the upper part moves slowly and is difficult to flow downwards. This phenomenon is more pronounced for pastes with higher viscosity. The above situation is relieved only after the paste at the lower part is fully stirred to become a fine fluid, and then the paste at the upper part gradually flows down and is stirred until it meets the standard requirements. This process takes a long time, and although paste that meets the standard can be produced, there are still issues of high viscosity and poor fineness in some pastes. Through research, the inventor believes that the reason for the occurrence of the above "layering" phenomenon is that the design volume of the stirring device for stirring large-capacity paste is relatively large, and the stirring blade is generally set in a lower position, which results in less stirring action on the paste at the upper part (which is a mixture of powders and liquids before or during stirring), causing the overall stirring process to lag behind. This leads to a "layering" phenomenon. In addition, through research and experiments, another major reason for the occurrence of the above phenomenon is that during the rapid rotation of the stirring blade, a pressure difference is formed between the lower and upper parts, which prevents the paste at the upper part from falling down and also causes a delay in effective stirring of the paste at the upper part. After understanding the cause of the technical problem, the inventor proposes the present application, which uses a pause between two stirrings to eliminate the above pressure difference, so that the paste at the upper part can flow down under gravity and be stirred together with the paste at the lower part. By performing stirring-pause-stirring-pause cycles, the occurrence of the above "layering" phenomenon is avoided, thereby improving stirring efficiency and effect.

Optionally, the set speed is a selected value between 200rpm and 1000rpm.

Optionally, the first set time is a selected value between 3000ms and 6000ms.

Optionally, the number of repetitions of step S400 is n times, where n ≥ 600.

Optionally, the set speed in any two steps S400 can be the same or different, the first set time in any two steps S400 can be the same or different, and the second set time in any two steps S400 can be the same or different.

Optionally, after reaching n = 600, step S500 is included after step S400: test the viscosity and fineness of the slurry, if it meets the standard, stop stirring operation, if not, continue with step S400.

Optionally, for slurries with viscosity standard values in the range of 3800 mPa s to 5700 mPa·s, the selected set speed is between 400 rpm and 1000 rpm, the selected first set time is between 3000 ms and 5000 ms, and the selected second set time is between 100 ms and 200 ms; for slurries with viscosity standard values in the range of 5700 mPa s to 6300 mPa·s, the selected set speed is between 600 rpm and 1000 rpm, the selected first set time is between 3000 ms and 4000 ms, and the selected second set time is between 100 ms and 300 ms.

Optionally, in step S300, the driving motor is instantaneously stopped by applying reverse current to the driving motor.

Furthermore, the present invention also provides a stirring device suitable for large capacity and high viscosity slurry, the stirring device comprises: a tank body forming a stirring chamber for powder and liquid to be placed into; a stirring blade extending into the stirring chamber for stirring the powder and liquid, the stirring blade being positioned at a lower position inside the stirring chamber; a driving motor for driving the stirring blade to rotate; and a control unit for controlling the start and stop of the driving motor; the control unit is configured to execute any of the applicable stirring methods for large capacity and high viscosity slurry as described above. The advantageous effects and reasoning process similar to the aforementioned stirring method apply to the stirring device provided by the present invention, and will not be redundantly described.

Optionally, the design volume of the stirring chamber is not less than 50L.

These features and advantages of the present invention will be further disclosed in detail in the following specific embodiments and accompanying drawings. The best embodiments or means of the present invention will be described in conjunction with the accompanying drawings, but they are not limitations on the technical solutions of the present invention. In addition, the features, elements, and components appearing in the following text and drawings appear multiple times and are marked with different symbols or numbers for convenience of representation, but all represent the same or similar structures or functions of the components.

### Attached figure description:

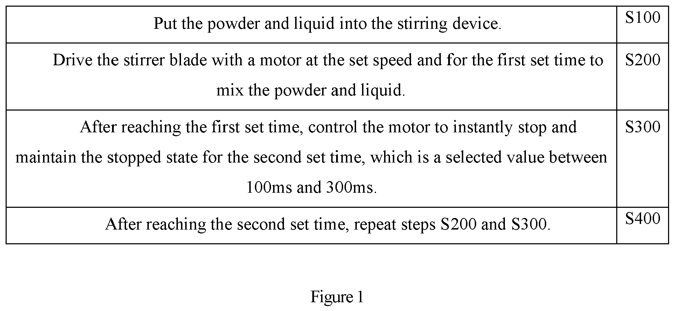

The invention is further explained in combination with the drawings:
As shown in Figure 1, the stirring method utilizes a stirring device including a driving motor and a stirring blade that rotates driven by the driving motor.

### Specific implementation methods

Here is a detailed description of an embodiment of the present invention, with examples shown in the accompanying drawings, where consistent or similar numerals represent the same or similar elements or elements with the same or similar functions throughout. The embodiments presented here are intended to illustrate the present invention, and should not be construed as limitations on the invention.

The term "embodiment" or "example" or "illustration" used in this specification refers to a specific feature, structure, or characteristic described in conjunction with the embodiment itself that can be included in at least one embodiment disclosed in this application. The phrase "in one embodiment" as used at various positions in the specification does not necessarily refer to the same embodiment.

Embodiment: This embodiment provides a stirring method suitable for large capacity and high viscosity slurries, as illustrated in Figure 1, which is implemented using a stirring device. The stirring device includes a driving motor and a stirring blade driven by the motor to rotate. The method comprises the following steps:
S 100: Putting the powder and liquid into the stirring device.
S200: Stirring the powder and liquid at a set speed and for a first set time by driving the stirring blade with the driving motor.
S300: Controlling the driving motor to instantly stop rotating and maintaining the stop state for a second set time, wherein the second set time is a selected value between 100ms and 300ms.
S400: Repeating steps S200 and S300 after reaching the second set time.

The inventor refers to this solution as the "start-stop control mode." By controlling the output shaft of the driving motor to repeat the process of "rotate, instant stop, wait" using a control unit, the stirring efficiency and effect are improved. The principle is explained as follows: The inventor discovered that when stirring a high capacity slurry, there is a phenomenon of "stratification," where the slurry at the bottom receives sufficient stirring while the slurry at the top has slow stirring speed and difficulty flowing downward. This phenomenon is more pronounced with higher slurry viscosity. This situation continues until the bottom slurry is fully stirred into a fine fluid, after which the top slurry gradually flows downward and is stirred until it reaches the desired standard. This process is time-consuming and results in some slurries having high viscosity and poor fineness.

The inventor believes that the reason for the occurrence of the "stratification" phenomenon is that the stirring device for stirring high capacity slurries has a large design volume, and the stirring blade is generally positioned lower, resulting in less stirring action on the slurry at the top (the mixture of powder and liquid before or during stirring). This leads to a lag in the stirring process of the top slurry compared to the bottom slurry, causing the "stratification" phenomenon. Additionally, the inventor found through research and experiments that another major reason for the aforementioned phenomenon is the pressure difference formed between the bottom and top by the rapidly rotating stirring blade, preventing the upper slurry from falling downward and causing a delay in effective stirring. After understanding the causes of the technical problems, the inventor proposed the solution described in this application, which eliminates the pressure difference by pausing between two stirrings, allowing the upper slurry to flow downward under gravity and be stirred together with the lower slurry. The cycle of stir-pause-stir-pause avoids the occurrence of the "stratification" phenomenon, thereby improving stirring efficiency and effect.

In step S300 of this embodiment, the driving motor is momentarily stopped by applying a reverse current to the driving motor. This method is also referred to as "reversed braking" and involves applying a reverse current to the motor to generate a reverse electromotive force, making the magnetic field rotation direction opposite to the rotor direction, thereby stopping the motor momentarily under the action of reverse torque. In other embodiments, momentary braking can also be achieved through "energy consumption braking" (consuming kinetic energy by supplying DC current to the motor) or "mechanical braking" (using brake pads or brake bands), or a combination of the three methods. The aforementioned methods of momentarily stopping the motor belong to prior art and are not further elaborated here. Controlling the driving motor to momentarily stop by applying reverse current is generally achievable within 100ms to 300ms when the motor speed is less than 800rpm and 200ms to 300ms when the motor speed is between 800rpm and 1200rpm. Therefore, the "momentary" in the "momentary stop" in this embodiment refers to the time period between 100ms and 300ms. It should be emphasized that momentary stop is crucial for the downward flow of the upper slurry. If the time required for motor stop is too long, the aforementioned "pressure difference" cannot be rapidly eliminated and would slowly reach equilibrium, making it difficult for the upper slurry to flow downward and maintain the "stratification" phenomenon.

It should be noted that such a solution requires higher motor performance, resulting in higher motor costs. In the prior art, without realizing the causes and principles of the technical problems, there was no motivation to adopt such high-cost motors to control the momentary stop of the stirring blade.

Additionally, it should be noted that the driving motor also requires a certain amount of time to start from a stationary state and reach the set speed. This process generally takes 300ms to 500ms and is part of the normal motor startup process, which is not specifically emphasized in this stirring method provided in this embodiment. Therefore, the first set time referred to in this embodiment is the time the driving motor maintains the set speed after completing the aforementioned startup process and reaching the corresponding set speed.

Different products require different final standard viscosities for the slurry, and the corresponding viscosity changes during stirring also differ. Therefore, the optimal set speed, first set time, and second set time vary for different viscosities of the slurry. Hence, the inventor determined suitable parameter values through extensive experimental research for slurries with different viscosities. In this embodiment, three sets of experiments for preparing different products were conducted, with multiple repetitions for each product. The experimental conditions and results are as follows:
Taking an experiment to prepare CMC colloid product as an example, the powder to be added is CMC and the liquid is water, with respective masses of CMC powder (0.99kg) and water (59kg). The viscosity standard value for the prepared CMC colloid slurry is 6000±300 mPa·s.

Two sets of experiments were designed for the experimental group, with the first set time set at 3000ms and the second set time set at 100ms. The set speed was varied in five groups for the experimental group. The control group correspondingly had five groups but used continuous stirring without pauses. The experimental results are shown in the table below:

| | Set speed (rpm) | First set time (ms) | Second set time (ms) | Viscosity (mPa.s) | Fineness (um) | Completion time (min) |
|---|---|---|---|---|---|---|
| Experimental group | 200 | 3000 | 100 | 6120 | 23 | 110 |
| Control group | 200 | -------- | -------- | 6180 | 27 | 142 |
| Experimental group | 400 | 3000 | 100 | 6185 | 23 | 96 |
| Control group | 400 | -------- | -------- | 6090 | 27 | 133 |
| Experimental group | 600 | 3000 | 100 | 6110 | 24 | 80 |
| Control group | 600 | -------- | -------- | 6175 | 28 | 125 |
| Experimental group | 800 | 3000 | 100 | 6035 | 24 | 70 |
| Control group | 800 | -------- | -------- | 6125 | 29 | 118 |
| Experimental group | 1000 | 3000 | 100 | 5988 | 26 | 75 |
| Control group | 1000 | -------- | -------- | 6050 | 30 | 115 |

In the second group experiment, the stirring was performed using the stirring method provided in this embodiment. Three different first set times were set, each corresponding to a different second set time. The effect of the first set time and second set time on the stirring time was studied under the same set speed (1000rpm). The experimental results are shown in the table below:

| Second set time | First set time: 3000ms | First set time: 4000ms | First set time: 5000ms | First set time: 6000ms | |
|---|---|---|---|---|---|
| 100ms | 75 | 70 | 80 | 90 | Mixing time (min) |
| 200ms | 70 | 65 | 75 | 85 | |
| 300ms | 80 | 75 | 85 | 95 | |

Taking the preparation of negative electrode graphite slurry as an example, the experiment requires the addition of MAG-TL3 negative electrode main material as the solid component and CMC solution as the liquid component. The quantities added are 15kg of MAG-TL3 negative electrode main material and 10.3kg (pure 1.5kg) of CMC solution. The target viscosity for the prepared negative electrode graphite slurry is 5500±200 mPa·s. Two experimental groups are designed.

In the first experimental group, the first set time is set to 3000ms and the second set time is set to 100ms. The set rotation speed is changed, and five different set rotation speeds are designed for the experimental group. The control group corresponds to five sets and uses continuous agitation without pause. The experimental results are shown in the table below:

| | Set speed (rpm) | First set time (ms) | Second set time (ms) | Viscosity (mPa.s) | Fineness (um) | Completion time (min) |
|---|---|---|---|---|---|---|
| Experimental group | 200 | 3000 | 100 | 5600 | 21 | 180 |
| Control group | 200 | -------- | -------- | 5565 | 23 | 235 |
| Experimental group | 400 | 3000 | 100 | 5520 | 24 | 150 |
| Control group | 400 | -------- | -------- | 5610 | 24 | 220 |
| Experimental group | 600 | 3000 | 100 | 5585 | 26 | 133 |
| Control group | 600 | -------- | -------- | 5520 | 25 | 205 |
| Experimental group | 800 | 3000 | 100 | 5470 | 26 | 128 |
| Control group | 800 | -------- | -------- | 5395 | 24 | 195 |
| Experimental group | 1000 | 3000 | 100 | 5415 | 28 | 120 |
| Control group | 1000 | -------- | -------- | 5440 | 27 | 190 |

In the second group of experiments, the stirring method provided in this embodiment was used for stirring. Three different first set times were set, and the corresponding second set times were set under each first set time. The influence of the first set time and the second set time on stirring time was studied at the same set speed (1000rpm). The experimental results are shown in the table below:

| Second set time | First set time: 3000ms | First set time: 4000ms | First set time: 5000ms | First set time: 6000ms | |
|---|---|---|---|---|---|
| 100ms | 120 | 105 | 128 | 135 | Mixing time (min) |
| 200ms | 103 | 96 | 120 | 128 | |
| 300ms | 130 | 120 | 133 | 148 | |

Taking the preparation of another negative electrode graphite slurry product as an example, the powders required for preparation are coke, liquid Super P conductive agent, CMC thickener, pure water, NMP solvent, and SBR binding agent, with masses of 12kg, 0.1782kg, 0.204kg, 10kg, 0.19kg, and 0.858kg, respectively. The viscosity standard value of the prepared negative electrode graphite slurry is 4000 ± 200 mPa·s. Two sets of experiments were designed.

In the first group of experiments, the first set time in the experimental group was set to 3000ms, and the second set time was set to 100ms. The set speed was changed, and five different set speeds were designed for the experimental group; the control group corresponded to five groups, and the stirring was continuously performed without pause. The experimental results are shown in the table below:

| | Set speed (rpm) | First set time (ms) | Second set time (ms) | Viscosity (mPa.s) | Fineness (um) | Completion time (min) |
|---|---|---|---|---|---|---|
| Experimental group | 200 | 3000 | 100 | 4120 | 24 | 190 |
| Control group | 200 | -------- | -------- | 3990 | 23 | 240 |
| Experimental group | 400 | 3000 | 100 | 4085 | 24 | 160 |
| Control group | 400 | -------- | -------- | 4020 | 24 | 225 |
| Experimental group | 600 | 3000 | 100 | 4100 | 22 | 145 |
| Control group | 600 | -------- | -------- | 4070 | 25 | 210 |
| Experimental group | 800 | 3000 | 100 | 4015 | 24 | 135 |
| Control group | 800 | -------- | -------- | 4115 | 24 | 195 |
| Experimental group | 1000 | 3000 | 100 | 3945 | 25 | 120 |
| Control group | 1000 | -------- | -------- | 4030 | 26 | 190 |

In the second group of experiments, the stirring method provided in this embodiment was used for stirring. Three different first set times were set, and the corresponding second set times were set under each first set time. The influence of the first set time and the second set time on stirring time was studied at the same set speed (1000rpm). The experimental results are shown in the table below.

| Second set time | First set time: 3000ms | First set time: 4000ms | First set time: 5000ms | First set time: 6000ms | |
|---|---|---|---|---|---|
| 100ms | 120 | 108 | 125 | 139 | Mixing time (min) |
| 200ms | 109 | 99 | 124 | 131 | |
| 300ms | 135 | 126 | 140 | 151 | |

Based on the above experiments, it can be concluded that for slurries with viscosity standard values in the range of 3800 mPa·s to 5700 mPa·s, selecting a set speed between 400rpm and 1000rpm, a first set time between 3000ms and 5000ms, and a second set time between 100ms and 200ms can achieve optimal stirring efficiency and effect. For slurries with viscosity standard values in the range of 5700 mPa·s to 6300 mPa s, selecting a set speed between 600rpm and 1000rpm, a first set time between 3000ms and 4000ms, and a second set time between 100ms and 300ms can achieve optimal stirring efficiency and effect.

It should be understood that the above-mentioned setting of different set speed ranges, first set time ranges, and second set time ranges based on viscosity standard values is an optimized solution. In other embodiments, the set speed can be between 200rpm and 1000rpm, the first set time can be between 3000ms and 6000ms, and the second set time can be between 100ms and 300ms to achieve better stirring effect and efficiency than the existing technologies.

It should be noted that the stirring method provided in this embodiment achieves more significant beneficial effects compared to existing technologies when stirring large-capacity, high-viscosity slurries. However, this does not imply that the stirring method provided in this embodiment is only suitable for large-capacity, high-viscosity slurries.

Furthermore, the number of iterations for step S400 is n times, where n≥600. It has been found through experiments that in this embodiment, the "stir-pause" process needs to be performed for at least 600 times. The set speed in any two iterations of step S400 can be the same or different; the first set time in any two iterations of step S400 can be the same or different; the second set time in any two iterations of step S400 can be the same or different. Therefore, when applying the stirring method provided in this embodiment, the set speed, first set time, and second set time in steps S200 and S300 do not need to be specific values and can vary according to needs. They can be constant values or different values in different iterations.

Additionally, after step S400, this embodiment includes step S500: testing the viscosity and fineness of the slurry. If they meet the standards, the stirring operation is stopped; if not, step S400 is continued. To save time and testing costs, step S500 is performed after 600 iterations of step S400. In actual operation, experienced operators can also observe the slurry in the stirring process through a window. Slurry with a smooth and glossy appearance is generally considered to meet the requirements, and sampling can be done by opening the valve (stirring can continue during sampling or the machine can be stopped until the test results are obtained). After the sample is tested, it can be determined whether the viscosity and fineness meet the requirements.

It should be noted that in existing technologies, the focus of various solutions has been on two factors: reducing the stirring volume through batch feeding to improve stirring efficiency and effect within a certain time period, but this inevitably prolongs the overall stirring time. Another approach is to switch between forward and reverse rotation to simulate the mixing process in engineering or common household appliances like a blender to enhance stirring efficiency and effect. However, the objective understanding of the technical problems and principles had not been realized, so there was no motivation for researchers in this field to study the relationship between parameters such as set speed, first set time, second set time, and stirring time and effect. Hence, it was not expected that the first set time for set speed should be so short (generally not exceeding 6000ms, i.e., 6 seconds) and to pause the stirring after such a short rotation time, which contradicts common knowledge (in the existing technologies, switching between forward and reverse rotation usually takes 5 to 20 minutes). According to the experimental research in this application, stirring efficiency and effect start to decline after more than 6 seconds of rotation.

When applying the stirring method provided in this embodiment, the stirring device can use existing technologies, which generally include a tank, stirring blades, a drive motor, and a control unit. The tank forms a stirring chamber for the powder and liquid to be added, and the stirring blades extend into the stirring chamber to mix the powder and liquid. The stirring blades are located at the lower part of the stirring chamber, and the drive motor is used to rotate the stirring blades. The control unit is configured to execute the stirring method described above. As mentioned earlier, the improved aspect of this embodiment is that the control unit is configured to execute the stirring method. The design volume of the stirring chamber in the tank of the above-mentioned stirring device is not less than 50L, allowing for stirring of large volumes of feed material at one time to fully utilize the advantages of this stirring method.

The above description is only one specific embodiment of the present invention, but the scope of protection of the present invention is not limited to this. Those skilled in the art should understand that the present invention includes, but is not limited to, the contents described in the accompanying drawings and specific embodiments above.

## Claims

1. A stirring method for large capacity and high viscosity slurries, implemented using a stirring device, wherein the stirring device comprises a driving motor and a stirring blade driven by the driving motor to rotate, **characterized by** the following steps:
S100: Putting the powder and liquid into the stirring device;
S200: Stirring the powder and liquid at a set rotational speed and for a first set time using the driving motor, wherein the first set time is a selected value between 3000ms and 6000ms;
S300: Controlling the driving motor to stop within a time range of 100ms to 300ms after reaching the first set time and maintaining the stopped state for a second set time, wherein the second set time is a selected value between 100ms and 300ms;
S400: Repeating steps S200 and S300 after reaching the second set time.

2. The stirring method for large capacity and high viscosity slurries according to claim 1, wherein the set rotational speed is a selected value between 200rpm and 1000rpm.

3. The stirring method for large capacity and high viscosity slurries according to claim 1, wherein the number of repetitions of step S400 is n times, where n≥600.

4. The stirring method for large capacity and high viscosity slurries according to claim 3, wherein the set rotational speed in any two repetitions of step S400 is the same or different, the first set time in any two repetitions of step S400 is the same or different, and the second set time in any two repetitions of step S400 is the same or different.

5. The stirring method for large capacity and high viscosity slurries according to claim 3, wherein, after reaching n=600, step S400 is followed by step S500: detecting the viscosity and fineness of the slurry, and stopping the stirring operation if it meets the standard, or continuing with step S400 if it does not meet the standard.

6. The stirring method for large capacity and high viscosity slurries, as claimed in any one of claims 1 to 5, **characterized in that**, for slurries with viscosity standard values ranging from 3800 mPa·s to 5700 mPa·s, the selected set rotational speed is between 400rpm and 1000rpm, the first set time is between 3000ms and 5000ms, and the second set time is between 100ms and 200ms; for slurries with viscosity standard values ranging from 5700 mPa s to 6300 mPa s, the selected set rotational speed is between 600rpm and 1000rpm, the first set time is between 3000ms and 4000ms, and the second set time is between 100ms and 300ms.

7. The stirring method for large capacity and high viscosity slurries according to claim 1, **characterized in that**, in step S300, the driving motor is instantly stopped by applying reverse current to the driving motor.

8. A stirring device for large capacity and high viscosity slurries, comprising: a tank forming a stirring chamber for receiving powder and liquid; a stirring blade that extends into the stirring chamber to stir the powder and liquid, wherein the stirring blade is situated at a lower position within the stirring chamber; a driving motor for rotating the stirring blade; and a control unit for controlling the starting and stopping of the driving motor; **characterized in that** the control unit is configured to execute the stirring method according to any one of claims 1 to 7, applicable to large capacity and high viscosity slurries.

9. The stirring device for large capacity and high viscosity slurries according to claim 8, **characterized in that** the designed volume of the stirring chamber is not less than 50L.
